# EUROPEAN PATENT SPECIFICATION

(11) **EP 0 801 273 B1**
(45) Date of publication and mention of the grant of the patent: **21.01.2004**
(21) Application number: 96935448.9
(22) Date of filing: 25.10.1996
(51) Int. Cl.: F24F 5/00, F24D 11/00, F24J 2/04, F24J 2/42

(54) **AIR-CONDITIONED CONSTRUCTION OF FLOOR AND CEILING**
AUFBAU EINES KLIMATISIERTEN BODENS UND DECKE
STRUCTURE DE SOLS ET DE PLAFONDS A AIR CONDITONNE

(30) Priority: 26.10.1995 JP 30050695
(43) Date of publication of application: 15.10.1997
(73) Proprietor: Izena Co. Ltd., Abiko-shi, Chiba-ken 270-11 (JP)
(72) Inventor: MAEDA, Seiichi, Abiko-shi, Chiba-ken 270-11 (JP)
(74) Representative: Albrecht, Thomas, Dr.
(86) International application number: PCT/JP1996/003125
(87) International publication number: WO 1997/015792

(56) References cited:
- WO-A-81/00445
- DE-A- 3 222 184
- JP-A- 58 129 118
- JP-A- 59 036 465
- JP-A- 62 121 363
- JP-U- 57 095 543
- US-A- 3 893 506
- ALEX LOHR: "Passive Solarsysteme" DEUTSCHE BAUZEITSCHRIFT, no. 12, December 1983, pages 1695-1700, XP002104487 Gütersloh, BRD
- PATENT ABSTRACTS OF JAPAN vol. 095, no. 002, 31 March 1995 -& JP 06 323554 A (IZENA:KK), 25 November 1994
- ARMAND DÜTZ: "Beispiele energiesparenden Bauens" DEUTSCHE BAUZEITSCHRIFT, no. 10, October 1981, pages 1521-1526, XP002104488 Gütersloh, BRD
- PATENT ABSTRACTS OF JAPAN vol. 008, no. 201 (M-325), 14 September 1984 -& JP 59 089949 A (SEKISUI HOUSE KK), 24 May 1984

## Description

### FIELD OF THE INVENTION

This invention relates to a floor and a ceiling heating system to be used in winter season and in intense cold area, and also relates to a floor and a ceiling cooling system to be used in summer season and in warm area. More in detail this invention relates to a construction of air-conditioning system built in floor and ceiling, being characteristic of not only using water which is gentle to a human body and environment as a filling up agent, but also using low cost energy such as solar energy, outside air temperature and evaporating energy for heating or cooling.

### BACK GROUND OF THE INVENTION

Recently, a floor heating system is becoming to attract a people's attention by following reasons. That is, since a room can be heated homogeneously by conductive heat or radiation heat from a floor, this system is recognized to have features to be gentle to a human body, not to pollute surrounding air and to be noiseless. Further, the room can be effectively and widely used because the floor itself is a heating system.

Up to the present time, various kinds of this floor heating system have been developed and actually carried out in various ways. These developed systems has a constructional feature that provide under a wooden floor a panel of electric heater having almost same surface area as the wooden floor and being electrically connected to the commercial electric power source, or pipes in which hot water flows, further provide an abiabator layer and a bottom layer below.

Although a ceiling heating system is popular in northern part of Europe but is not popular in Japan, and only a method to set up an air conditioner or an electric heating panel which uses a radiation heat closely to a ceiling are practically used.

Further, an equipment investigation for a cooling system which uses a floor and a ceiling is remarkably expensive, and generally it could not become so popular at the view point of high initial cost.

The conventional floor heating system is not only avoided from the expensive equipment investigation, but also has a problem in a comfortableness. That is, since this system uses a panel heater attached to the wooden structure, a heat capacity is low and a sensible temperature is easily changed by a change of surrounded atmosphere. Further, in general, regenerative agents used in a panel heater is not only very expensive but also has an environmental problem when wasted because they are chemically synthesized compounds. To dissolve said problem, the applicant of this invention has already disclosed a floor heating system which uses water as a regenerative agent in Japanese patent application JP-5135178 (Japanese patent laid open publication JP-6323554, however, electric energy is mainly used for a heating means in this invention.

In the afore-mentioned patent document JP 6323554 a floor heating structure is disclosed which comprises two layers spaced from each other and water-filled containers located between the two layers. The water in the containers can be heated by a heat source disposed on a side or the bottom of the containers. In that heating system only expensive energy can be used.

Furthermore, from the Japanese patent JP 58129118 a room heating construction is known which comprises an external collector in order to collect solar heat energy in the floor heating system for heating the room. The heating energy is past from the collector to the floor heating system by a heat exchanger. This system has the disadvantage that many components are necessary which increases the cost of the system. Furthermore, this heating system requires extensive installations and the external collector deteriorates the optical appearance of the building the heating system is built in.

It is an object of the present invention to provide a cheap room heating and room cooling system which can use cheap energy and does not require extensive installations.

### DISCLOSURE OF THE INVENTION

According to the present invention, this object is achieved by an air conditioning system as defined in claim 1. The dependent claims define advantages and preferred embodiments of the present invention.

The inventors of this invention have conduced intensive studies to dissolve above mentioned problems which conventional floor heating systems have, and developed following floor heating systems. That is, the air conditioning system of claim 1 comprises an intermediate layer between a surface board and a supporting layer, said intermediate layer being divided into plural spaces by dividing frames which support and divide the intermediate layer, containers filled up by water being set into each said plural spaces and forming a floor or ceiling main body, the containers further comprising sun-light receiving sections which receive sun-light or outside temperature receiving sections which receive outside temperature.

In the embodiment of the present invention of claim 2, a concrete or a mortar base layer is constructed under the surface board the containers filled up by water being embedded in said concrete or mortar base layer.

Further, in the air conditioning system a heating part can be located below the main body and can be partial or whole part of the sun-light receiving section, and thus dissolve above mentioned problem.

The heating part which is located below the main body can be provided together with another heating means.

A heat conductive controlling layer having lower heat conductivity can be provided to the upper surface of water contained in a container almost horizontally.

The air conditioning system of the present invention can comprise furthermore a cooling part which is located above the main body and is provided to partial or whole part of the outside air temperature receiving section, and thus dissolve above mentioned problems.

One object of the present invention is to provide an air-conditioned construction using water as a regenerative agent, which is gentle to a human body and environment, comfortable, safe and low price. That is, the present invention is characterised by using water as a regenerative agent instead of expensive chemically synthesized compounds, and by using solar energy, outside air temperature or evaporative energy as a heat source, further by circulating water as a regenerated agent naturally by convection caused by heating of a heating part located lower position of the system without using a special energy for the circulation of water.

The action of this invention is explained as follows, that is, by using water as a filling up agent, since whole water in container is heated homogeneously by convection action of water when heated, temperature of whole surface floor raises to the same temperature. And, the operating cost is not necessary because it uses solar energy as an energy source, additionally, to the sun-light receiving section a heating part located below the floor or ceiling main body is joined so as to the heated water ascend to the upper position by convection and warm up whole surface of the floor or the ceiling. Further, by providing another heating means as an annex to the sun-light receiving section, the effect of it is still more enlarged.

Still further, when a heat conductivity controlling layer is set up, period for heat radiation can be extended and the floor can be maintained at comfortable temperature range for longer period, and is possible to maintain the floor in a heating state for a long period.

This system is an air-cooling system characterizing by using outside air temperature or evaporative energy, it does not cost so much, in addition, by attaching cooling part located above the floor or ceiling main body to the outside air temperature receiving section, cooled water goes down to the lower position by the convection of water and cools down whole surface of the floor or the ceiling.

### THE BEST EMBODIMENTS TO CARRY OUT THE INVENTION

Air-conditioning constructions of this invention which have accomplished the above mentioned objects are illustrated by the attached drawings of some examples.
Figure 1 is a schematic plan view illustrating an example of an air-conditioning construction for a floor or a ceiling of this invention,
Figure 2 is a schematic sectional view illustrating the example of an air-conditioning construction for a floor or a ceiling of this invention,
Figure 2a and figure 2b are schematic sectional views illustrating other examples,
Figure 3 is a schematic view illustrating the example of an air-conditioning construction installed on a floor and a ceiling,
Figure 4 is a schematic view illustrating further example of an air-conditioning construction of this invention,

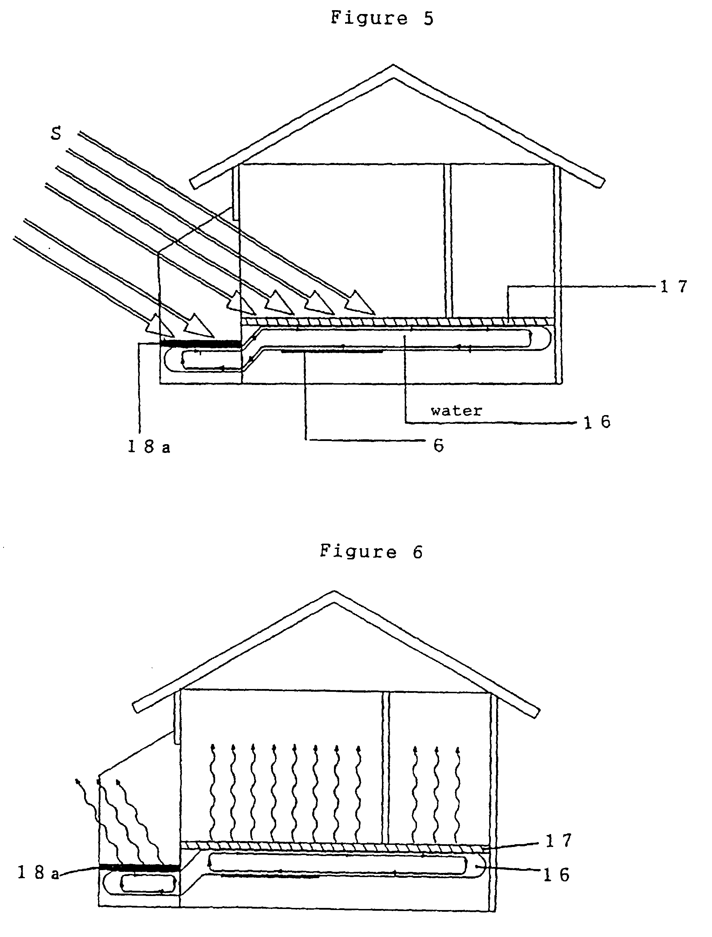

Figure 5 is a schematic view illustrating an example of a heating system of the present invention equipped with another heating means, and
Figure 6 is a sectional view of a cooling system of the present invention.

The present invention relates to a construction of a floor 1 and ceiling 2 heating system to be used in winter season and in the intense cold area, and more in detail relates to a construction of central heating system which is built in a floor 1 and a ceiling 2 and uses water which is gentle to a human body and an environment as a filling up liquid and which further uses solar energy which does not cost. And, the construction of this invention is characterized by forming an intermediate layer 13 between a surface board 11 and a supporting layer 12, said intermediate layer 13 is divided into plural spaces 15 by dividing frames 14 which support and divide the intermediate layer, containers 16 filled up by water are set into said plural spaces 15 and form a floor or ceiling main body 17, additionally sunlight receiving sections 18 which receive sunlight are attached to some of said containers 16. Additionally, heating parts 18a 28a which are located below the floor main body 17 or the ceiling main body 27 can be provided to the partial or whole part of said sun-light receiving sections 18, 28.

To the containers, it is possible to provide another heating means 6 together with said sun-light receiving section 28, and in a structure of floor constructing a concrete or a mortar base layer 2A under the surface floor board, it is possible to embed plural containers 16 in which water is filled up and to provide a heat source to each containers. Further, it is possible to set up a heat conductivity controlling layer 7 which has lower heat conductivity to the upper end of water contained in a container almost horizontally.

The present invention also relates to a construction of floor and ceiling cooling system to be used in summer season and in warm area, and more in detail relates to a construction of air-conditioning system which is built in a floor 1 or a ceiling 2 and uses water as filling up agent which is gentle to a human body and environment and cheap, and which further uses outside air temperature or evaporative energy which does not cost much. And, the construction of this invention is characterized by forming an intermediate layer 13, 23 between a surface board 11, 21 and a supporting layer 12, 22, said intermediate layer 13, 23 is divided into plural spaces 15, 25 by dividing frames 14, 24 which support and divide the intermediate layer, further containers 16, 26 filled up by water are set into said plural spaces 15, 25 and form a floor or ceiling main body 17, 27, additionally an outside air temperature receiving section 19, 29 which receives outside air temperature is provided to some of said containers 16, 26. Additionally cooling parts 19a, 29a which are located above said floor main body 17 or ceiling main body 27 are provided to the partial or whole part of said outside air temperature receiving section 28.

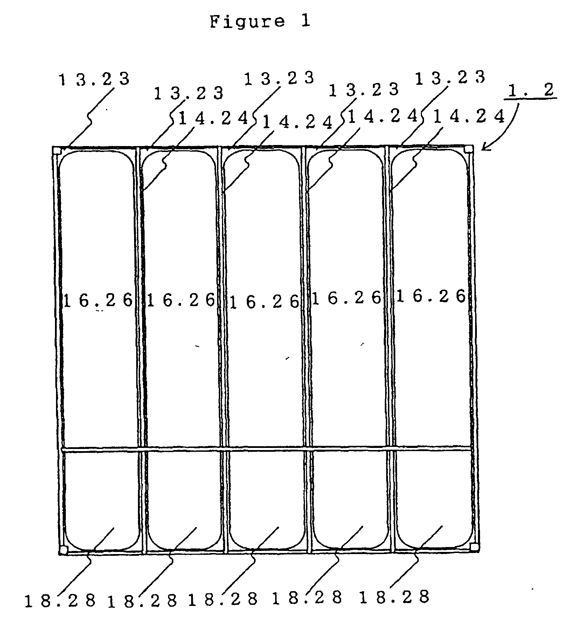

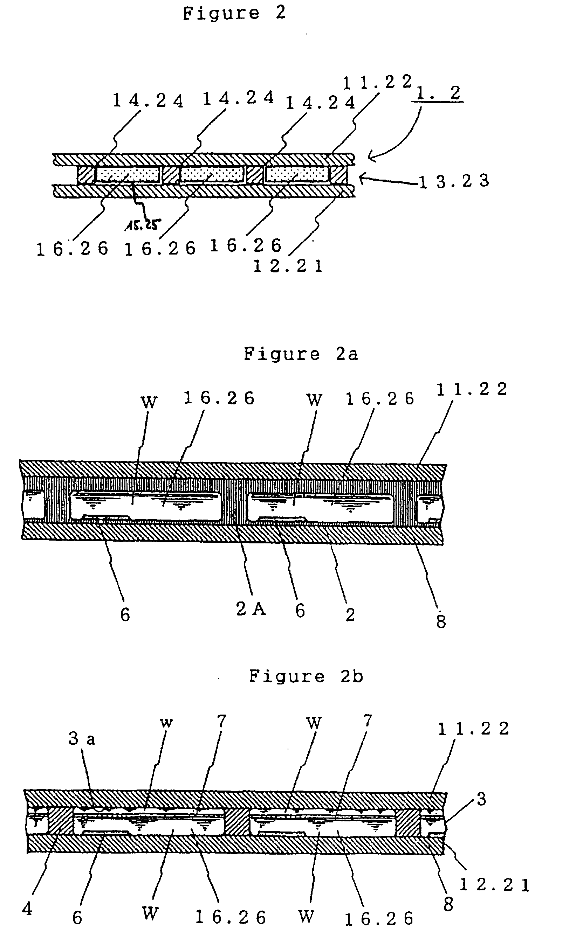

In case of the construction of a cooling and heating system of a floor 1 described in claim 1 of this invention, as illustrated by figure 1 and 2, a woody surface floor board 11, an abiabator and a bottom supporting layer 12 such as wire net is constructed on a base of building, and an intermediate layer 13 which has a voluntary height is formed between said surface floor board 11 and said bottom supporting layer 12. By dividing and supporting said intermediate layer 13 with dividing frames 14, plural spaces 15 in which containers 16 can be set are formed, and the size of spaces 15 can be set up voluntarily, further, an abiabator layer of plastic foam or felt under the surface floor board 11 can be also voluntarily prepared.

Then containers 16 are set into said plural spaces 15. As the container 16, a flexible container made of single layer or complex layer of synthetic resin, synthetic rubber or non-woven cloth, or a rigid container made of metal such as stainless steel or hard type synthetic resin can be preferably used, and water is filled up into said containers 16.

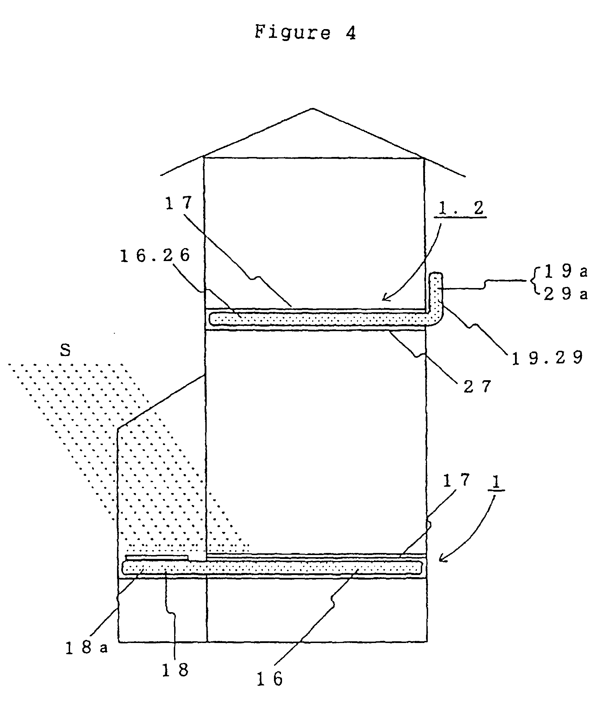

The sun-light receiving sections 18 which receive sun-light S are attached to some of said containers 16. As illustrated in the first floor of figure 4, said sun-light receiving sections 18 itself can be a floor which is designed to receive sun-light S actively such as sun room, or can be placed at windowside where always sun-light shines, further, it can be constructed at the outside position where sun always shines making a hole through an outer wall of the building.

Further, upper surface of the sun-light receiving section 18 can be covered by a heat accumulator which absorbs solar energy efficiently and heat the sun-light receiving sections effectively. Additionally, in a night time, to prevent the cooling down of temperature, it is possible to cover it by an adiabator.

To the bottom or side surface of the containers 16, it is possible to provide another heating means which heat the contained water by other kinds of energy, such as sheet type electric heater, heat accumulating pipe placed on a roof, hot air generator or water heater. Thus the energy for heating can be effectively obtained by using said subsidiary heating means together with the solar energy.

The above mentioned construction of the floor heating system may also be built in a ceiling instead of a floor. An intermediate layer 23 is formed between a surface ceiling board 21 and upper supporting layer 22, said intermediate layer 23 is divided into plural spaces 25 by dividing frames 24 which support and divide the layer, containers 26 filled up by water are set into said plural spaces 25 and form a ceiling main body 27, and sun-light receiving sections 28 are similarly provided.

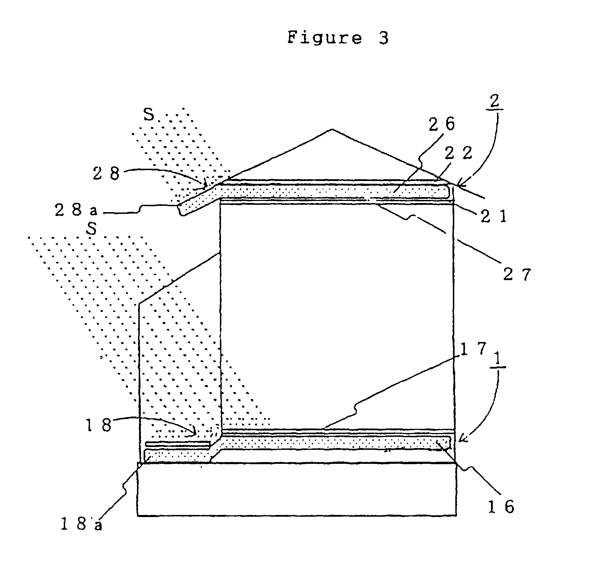

As illustrated by floor 1 and ceiling 2 of the first floor in figure 3, heating parts 18a and 28a which are located below the floor main body 17 or ceiling main body 27 are provided to the partial or whole part of said sun-light receiving sections 18 and 28.

That is, by joining heating parts 18a and 28a which are located below the floor main body 17 or ceiling main body 27, warm water which is heated in the sun-light receiving sections 18 and 28 ascend to the upper position by natural convection and is extended to the whole floor main body 17 or the ceiling main body 27. On the contrary, cool water flows back to the heating parts 18a and 28a which is located below the floor main body 17 or ceiling main body 27 and heated in the sun-light receiving sections 18 and 28 and ascend again to the upper position by natural convection. This circulation is repeated, thus the heating can be carried out effectively.

After sunset, the temperature of heating parts 18a and 28a become lower than that of floor main body 17 or ceiling main body 27, however, water of lower temperature remaining in the heating parts 18a and 28a located below the floor main body 17 or ceiling main body 27 remains there without circulating by convection. Therefore, it is possible to maintain the warm temperature of floor 1 or ceiling 2 for many hours.

If it is necessary to set up the temperature of the floor heating system to a higher temperature effectively, it is possible to set up a heat conductive controlling layer 7 to the upper surface of water contained in a container 16 almost horizontally (shown in figure 2b). As the said heat conductive controlling layer 7, a water passable package in which active carbon or arum root paste is filled up, a high water absorbing material used as the material for a paper diaper or a gelled material by adding water can be used, and the object of it is to control the energy conduction to the upper region by reducing the heat conduction lower than that of water.

In this case; water contained in said heat conductive controlling layer 7 is not influenced by convection of water, and heat energy is received from the contacted surface of water by means of heat conduction. Said heat conductive controlling layer 7 has a function to control the heat energy conduction, however, heat energy is conducted slowly at the surface between the heat conductive controlling layer 7 and water which exists above. That is, even if the temperature of the water below the heat conductive controlling layer 7 is set up at high temperature, the water above the heat conductive controlling layer 7 can maintain comfortable temperature without largely influenced by the temperature of the water below, and the heating effect can be maintained for many hours after the heat supply is shuttered.

When the temperature of floor surface becomes higher by influence of sun-light or a foot-warmer than that of contained water, heat energy is stored in water, further the temperature of whole unit in which one container 16 is set is uniformly warmed up, and partial high temperature can be avoided.

Since the floor main body 17 of floor 1 cooling system is almost same to the construction of floor 1 heating system, the detailed construction of it is not illustrated here. An outside air temperature receiving section 19 is attached to some of containers 16. Said outside air temperature receiving section 19 is located at northern wall of building where is always shaded from sun-light, further it is possible to cool it down using vaporizing heat of water by sprinkling water over the surface.

The ceiling main body 27 of ceiling 2 cooling system is almost same to the construction of the ceiling 2 heating system, further the outside air temperature receiving section 29 is almost similar to the construction of the cooling system in figure 4.

Additionally, in the construction of floor 1 and ceiling 2 cooling system, as illustrated by floor 1 of the second floor or ceiling 2 of the first floor of figure 4, cooling parts 19a, 29a which are located above the floor main body 17 or ceiling main body 27 are provided to the partial or whole part of said outside air temperature receiving sections 19, 29.

That is, by joining heating parts 19a and 29a located above the floor main body 17 or the ceiling main body 27, chilled water cooled down by outside air temperature descends to the lower position by natural convection and is extended to the whole floor main body 17 or to the whole ceiling main body 27. On the contrary, warm water remains at the cooling parts 19a and 29a located above the floor main body 17 or the ceiling main body 27 and chilled by the out side temperature and descend again to the lower position by natural convection. This circulation is repeated, thus the cooling can be carried out effectively.

That is, the important point of the air conditioning construction of floor 1 and ceiling 2 is'to perform an effective cooling and heating using skillfully convection of water, heat energy stored in water contained in a container 16, 26 is conducted to a surface floor board 11 or a surface ceiling board 21 and radiated to a room as conductive heat or as radiant heat from said surface floor board 11 or said surface ceiling board 21.

This invention relates to a construction of the floor 1 and ceiling 2 cooling and heating system and covers from small scale construction for an individual house to large scale construction for buildings, such as school, kinder-garden or hospital. Since water which is cheap and can be easily procured is used as the filling up agent, it is possible to be procured at the construction spot without a transportation cost, further, when the house or the building is pulled down, contained water can be wasted without hurting a human body or an environment, and even if it is used by recycling it is not deteriorated by repeating uses.

Further in this invention, since sun-light energy and outside air temperature is practically used as an energy source, the equipment is safe and can operate without operating cost.

### POSSIBILITY FOR AN INDUSTRIAL USE

As above mentioned, since water is used as the filling up agent, partially heated or cooled water at the sun-light receiving section or outside air temperature receiving section is diffused by convection and the temperature of water becomes uniform, and the uniform temperature is conducted to a surface floor board or a surface ceiling board, and so the uniform temperature is diffused to the whole room. Further, the price of water used as filling up agent is relatively cheap, additionally, in a case of throwing away or in a case of accident of leaking, water does not affect a human body and an environment. Thus, the air-conditioning system built in a floor and a ceiling of this invention can be said to be gentle to a human body and an environment, additionally, an operating cost is not needed because natural energy is practically used. Namely, the present invention can be said as an epoch-making and an useful invention.

## Claims

1. Air conditioning system which is built in a floor or ceiling of a room comprising:
an intermediate layer (13, 23) between a surface board (11, 22) and a supporting layer (12, 21), said intermediate layer (13, 23) being divided into plural spaces (15, 25) by dividing frames (14, 24) which support and divide the intermediate layer (13, 23),
containers (16, 26) filled up by water being set into said plural spaces (15, 25) and forming a floor or ceiling main body (17, 27), **characterized in that** said container further comprise sun-light receiving sections (18, 28) which receive sun-light or outside temperature receiving sections (19, 29) which receive outside temperature.

2. Air conditioning system of claim 1, wherein a concrete or a mortar base layer is constructed under the surface board (11, 22) the concrete or mortar base layer embedding the containers (16, 26) filled up by water.

3. Air conditioning system of claim 1 or 2, wherein the main body is arranged at the floor and/or the ceiling of the room.

4. Air conditioning system of any one of claim 1 to 3, wherein a heating part (18a, 28a) which is located below the main body (17, 27) is provided partial or whole part of sun-light receiving (18, 28) portion is joined to

5. Air conditioning system of claim 4 wherein the heating part (18a, 28a) is provided together with another heating means (6).

6. Air conditioning system of claim 1 or 2, wherein a cooling part (19a, 29a) which is located above the main body (17, 27) is provided to partial or whole part of the outside air temperature receiving section (19, 29).

7. Air conditioning system of anyone of claim 1 to 6, wherein a heat conductive controlling layer having lower heat conductivity is provided to the upper surface of the water contained in the containers.

## Patentansprüche

1. Klimaanlagensystem, welches in einen Boden oder eine Decke eines Raumes eingebaut ist, umfassend:
eine Zwischenschicht (13, 23) zwischen einem Oberflächenbrett (11, 22) und einer Unterstützungsschicht (12, 21), wobei die Zwischenschicht (13, 23) durch unterteilende Rahmen (14, 24), welche die Zwischenschicht (13, 23) unterstützen und aufteilen, in mehrfache Zwischenräume (15, 25) aufgeteilt ist,
mit Wasser aufgefüllte Behälter (16, 26), welche in den mehrfachen Zwischenräumen (15, 25) eingesetzt sind und einen Boden- oder Deckenhauptkörper (17, 27) ausbilden,
**dadurch gekennzeichnet,**
**dass** die Behälter weiter Sonnenlicht aufnehmende Abschnitte (18, 28), welche Sonnenlicht aufnehmen, oder Außentemperatur aufnehmende Abschnitte (19, 29), welche Außentemperatur aufnehmen, umfassen.

2. Klimaanlagensystem nach Anspruch 1, wobei eine Beton- oder eine Mörtelbasisschicht unter dem Oberflächenbrett (11, 22) angeordnet ist, wobei die Beton- oder Mörtelbasisschicht die mit Wasser aufgefüllten Behälter (16, 26) einschließt.

3. Klimaanlagensystem nach Anspruch 1 oder 2, wobei der Hauptkörper an dem Boden und/oder der Decke des Raumes angeordnet ist.

4. Klimaanlagensystem nach einem der Ansprüche 1 bis 3, wobei ein heizendes Teil (18a, 28a), welches sich unter dem Hauptkörper (17, 27) befindet, teilweise oder vollständig als Teil des Sonnenlicht aufnehmenden Abschnittes (18, 28) mit diesem verbunden ist.

5. Klimaanlagensystem nach Anspruch 4, wobei das heizende Teil (18a, 28a) zusammen mit einem anderen Heizmittel (6) vorhanden ist.

6. Klimaanlagensystem nach Anspruch 1 oder 2, wobei ein kühlendes Teil (19a, 29a), welches sich über dem Hauptkörper (17, 27) befindet, teilweise oder vollständig als Teil des Außenlufttemperatur aufnehmenden Abschnittes (19, 29) daran vorhanden ist.

7. Klimaanlagensystem nach einem der Ansprüche 1 bis 6, wobei eine Wärmeleitfähigkeit-Steuerschicht mit geringerer Wärmeleitfähigkeit an der oberen Oberfläche des in den Behältern enthaltenen Wassers vorhanden ist.

## Revendications

1. Système d'air conditionné construit dans le plancher ou le plafond d'une salle comprenant :
une couche intermédiaire (13, 23) entre un plancher de surface (11, 22) et une couche de soutien (12, 21), ladite couche intermédiaire (13, 23) étant divisée en plusieurs espaces (15, 25) par des châssis de division (14, 24) qui soutiennent et divisent la couche intermédiaire (13, 23), des conteneurs (16, 26) remplis d'eau étant disposés dans lesdits espaces (15, 25) et formant un corps principal de plancher ou de plafond (17, 27) **caractérisé en ce que** lesdits conteneurs comprennent en outre des sections de réception de lumière solaire (18, 28) qui reçoivent la lumière solaire ou des sections recevant la température extérieure (19, 29) qui reçoivent la température extérieure.

2. Système d'air conditionné selon la revendication 1, dans lequel une couche de base de béton ou de mortier est réalisée sous le plancher de surface (11, 22) : la couche de base de béton ou de mortier intégrant les conteneurs (16, 26) remplis d'eau.

3. Système d'air conditionné selon la revendication 1 ou 2, dans lequel le corps principal est disposé dans le plancher ou le plafond de la salle.

4. Système d'air conditionné selon l'une des revendications 1 à 3, dans lequel la partie chauffage (18a, 28a) qui se trouve sous le corps principal (17, 27) est dotée partiellement ou en totalité d'une portion de réception de lumière solaire à laquelle il est lié.

5. Système d'air conditionné selon la revendication 4, dans lequel la partie chauffage (18a, 28a) est proposée en même temps que d'autres moyens de chauffage (6).

6. Système d'air conditionné selon la revendication 1 ou 2, dans lequel une partie refroidissement (19a, 29a) qui se trouve au-dessus du corps principal (17, 27) est proposée partiellement ou totalement comme section de réception de température d'air extérieur.

7. Système d'air conditionné selon l'une des revendications 1 à 6, dans laquelle une couche de contrôle conductrice de la chaleur ayant une conductivité thermique plus faible est proposée sur la surface supérieure de l'eau contenue dans les conteneurs.
